# EUROPEAN PATENT APPLICATION

(11) **EP 4 339 995 A1**
(43) Date of publication of application: **20.03.2024**
(21) Application number: 23197466.8
(22) Date of filing: 14.09.2023
(51) Int. Cl.: H01J 49/00, H01J 49/28

(54) **TUNING A MASS SPECTROMETER COMPRISING A DOUBLE WIEN FILTER**

(30) Priority: 14.09.2022 GB 202213501
(71) Applicant: Thermo Fisher Scientific (Bremen) GmbH, 28199 Bremen (DE)
(72) Inventor: WEHRS, Henning, 28199 Bremen (DE); PFEIFER, Markus, 28199 Bremen (DE); HINRICHS, Joachim, 28199 Bremen (DE); CRAIG, Grant, 28199 Bremen (DE)
(74) Representative: Jarrett, Daniel Phillip

(57) **Abstract**

A method of tuning a static field mass filter of a mass spectrometer, the static field mass filter having a first Wien filter and a second Wien filter. The method comprises injecting a beam of ions into the static field mass filter, applying a magnetic and an electric field in the first and second Wien filters, adjusting a lens positioned downstream of the first Wien filter and upstream of the second Wien filter.

## Description

### Field

The present disclosure relates generally to mass spectrometers with a static field mass filter.

### Background

Multicollector mass spectrometers, such as inductively coupled plasma mass spectrometers (MC-ICP-MS), are instruments used to investigate small differences in the abundance ratios of analysed isotopes.

For example, Strontium (Sr) has 4 isotopes with the following masses and abundances:

| Isotope | 84Sr | 86Sr | 87Sr | 88Sr |
|---|---|---|---|---|
| Abundance | 0.56% | 9.86% | 7% | 82.58% |

With improvements in the accuracy of mass spectrometers during the last century, it became clear that the isotope ratios (87Sr/86Sr ≈ 0.7103 or 84Sr/87Sr ≈ 0.0535) are not identical across different samples. Furthermore, it became apparent that the accurate determination of Sr isotope ratios is a powerful tool for archaeologists. Since the isotopic composition of the diet of an individual is preserved in the bones of an individual, a statement about the place of birth of an individual can be made when matching the Sr isotope ratios of the bones of a dead body to the Sr isotope ratios of the soil in a specific region.

Besides Sr, there are many other isotope systems which are of interest for scientific or technical questions. Another example is the Rubidium - Strontium (Rb - Sr) dating which makes use of the fact that 87Rb decays into 87Sr with a half-life of about 50 billion years: by determining the 87Sr/86Sr ratio as well as the Rb/Sr ratio of different minerals of a sample, the time elapsed since the sample crystallised can be calculated.

However, the 87Sr cannot be easily mass resolved from the 87Rb (86.909180527 amu to 86.9088774970 amu would require a mass resolving power of more than 200,000, while the upper limit of commercially available isotope ratio mass spectrometers is below 50,000). Isotopic methods that suffer from isotopic interferences as the Rb/Sr method therefore require complex chemical cleaning steps prior to the actual measurement with a mass spectrometer, which makes these methods time consuming and limits them to samples that are available in relatively high quantities.

A solution for this problem is the use of a collision reaction cell: the ions are guided through a cell which is filled with a reactive gas. With an appropriate choice of the gas, one can obtain that the analyte ions are mass-shifted (by forming molecules when reacting with the gas), while the interfering ions are not. For example, the analyte ions become 16 atomic mass units (amu) heavier when reacting with oxygen, while the mass of the interfering ions remains the same.

By doing this, the mass difference of sample ions and interfering ions, which was marginal before entering the collision cell, becomes large enough to be easily resolved by the mass spectrometer downstream of the collision cell.

To avoid the problem of elements that interfere with the mass shifted analyte ions, a pre-mass-filter with a bandpass characteristic can be used, such that only the masses of interest reach the collision cell while ions that interfere with the mass shifted ions are not transmitted. In EP 3 769 334 B1, the entire contents of which are herewith incorporated by reference in this document, a pre-filter comprising a combination of two Wien filters is disclosed. Such a pre-filter can have a mass-independent transmission.

A pre-filter comprising a combination of two Wien filters is suitable for blocking the intense Ar beam caused by the plasma source of ICP-MS instruments as early as possible in the ion optics. By blocking the Ar beam, the total ion load of the ion beam is greatly reduced. This is beneficial for the resolving power of the instrument and, in particular, for the abundance sensitivity. However, optimizing the settings of a pre-filter comprising a double Wien filter is not intuitive.

### Summary

Aspects of the present disclosure are defined in the accompanying independent claims.

### Overview of disclosure

A method of tuning a static field mass filter of a mass spectrometer, the static field mass filter having a first Wien filter and a second Wien filter is disclosed herein. The method comprises:
causing a beam of ions comprising a plurality of ion species to be injected through an entrance aperture into the static field mass filter;
applying, in the first Wien filter, a first magnetic field and a first electric field having a first magnetic field strength and a first electric field strength, respectively, to deflect the beam into a respective subbeam for each ion species of the plurality of ion species;
applying, in the second Wien filter, a second magnetic field and a second electric field having the first magnetic field strength and the first electric field strength, respectively, to counter the deflection of the subbeams caused by the first Wien filter;
adjusting a first lens (214) of the static field mass filter, positioned downstream of the first Wien filter and upstream of the second Wien filter, such that the trajectories of the subbeams downstream of the second Wien filter are substantially mass independent.

Optionally, the method further comprises, after adjusting the first lens (214), adjusting at least one further lens (211, 216, 218) of the static field mass filter to focus one or more of the subbeams towards a target.

Optionally, the at least one further lens (216, 218) is positioned downstream of the second Wien filter.

Optionally, the at least one further lens (211) is positioned upstream of the second Wien filter.

Optionally, the method further comprises, prior to applying in the first Wien filter a first magnetic field and a first electric field and in the second Wien filter a second magnetic field and a second electric field, adjusting at least one further lens (211, 216, 218) to maximize the intensity of the subbeams at the mass spectrometer, preferably further comprising maximizing the resulting intensity.

Optionally, adjusting the first lens (214) comprises determining at least one isotope ratio and determining whether the adjusting results in a substantially unchanged isotope ratio.

Optionally, the method further comprises, after adjusting at least one further lens (211, 216, 218), moving the subbeams relative to the target and detecting the resulting intensity at the mass spectrometer, preferably further comprising maximizing the resulting intensity.

Optionally, the method further comprises detecting at least one isotope ratio of different isotope species.

Optionally, the target is at least one of:
an entrance aperture of the mass spectrometer downstream of the static mass filter,
an entrance aperture of a collision cell downstream of the static mass filter,
an entrance aperture of a vacuum chamber downstream of the static mass filter, and
an ion optical element (e.g., a lens, a magnetic sector, an electric sector).

Optionally, a third electric field having a second electric field strength is applied in the second or third lens, and, optionally, adjusting the second or third lens comprises:
varying the strength of the electric field of the second or third lens in a predetermined range including the second electric field strength;
determining whether the varying results in a change, greater than a predetermined maximum change, in a first ratio of an intensity of ions in the subbeam for a first species of the plurality of ion species and an intensity of ions in the subbeam for a second species of the plurality of ion species; and
responsive to determining that the varying leads to a change in the first ratio that is greater than the predetermined maximum change:
   changing the second electric field strength to a third electric field strength; and
   repeating the varying, the determining, and the changing until it is determined that the varying does not result in a change in the first ratio that is greater than the predetermined maximum change.

Optionally, a third electric field having a second electric field strength is applied in the second or third lens, and, optionally, adjusting the second or third lens comprises:
a) determining a first ratio of an intensity of ions in the subbeam for a first species of the plurality of ion species and an intensity of ions in the subbeam for a second species of the plurality of ion species;
b) changing the electric field strength of the electric field applied in the second or third lens to a third electric field strength that is lower than the second electric field strength;
c) subsequent to the changing of the electric field strength applied in the second or third lens to the third electric field strength, determining a second ratio of an intensity of ions in the subbeam for the first species of the plurality of ion species and an intensity of ions in the subbeam for the second species of the plurality of ion species;
d) changing the electric field strength of the electric field applied in the second or third lens to a fourth electric field strength that is higher than the second electric field strength;
e) subsequent to the changing of the electric field strength applied in the second or third lens to the fourth electric field strength, determining a third ratio of an intensity of ions in the subbeam for the first species of the plurality of ion species and an intensity of ions in the subbeam for the second species of the plurality of ion species;
f) determining a first difference between the first and second determined ratios and a second difference between the first and third determined ratios;
g) determining whether the first and second differences are within a predetermined difference range; and
h) responsive to determining that the first and second differences are not within the predetermined difference range:
   changing the second electric field strength to a fifth electric field strength; and
   repeating steps a) to h) until it is determined that the first and second differences are within the predetermined difference range.

Optionally, the fifth electric field strength is determined using a search algorithm.

Optionally, the search algorithm is a binary or linear search algorithm.

Optionally, adjusting a lens comprises adjusting a deflection of the lens.

Optionally, the static field mass filter has a central axis, the entrance and exit apertures of the static field mass filter are aligned on the central axis, and the beam of ions is injected into the static field mass filter along the central axis, and, optionally, the adjusting of the first lens of the static field mass filter is to focus the beam towards the exit aperture of the static field mass filter and to ensure that the beam passes through the first and second Wien filters on the central axis of the static field mass filter.

Optionally, the adjusting of the second lens of the static field mass filter is to focus one or more of the subbeams towards the exit aperture and into the second Wien filter.

Optionally, the method further comprises:
prior to the adjusting of the first lens of the static field mass filter, narrowing a slit of the static field mass filter, the slit being downstream of the first Wien filter and upstream of the second lens, to a first slit width; and
subsequent to the adjusting of the first lens of the static field mass filter, widening the slit to a second width.

Optionally, the method is computer-implemented.

There is disclosed an apparatus configured to perform any of the methods described herein.

There is disclosed a computer-readable medium comprising instructions which, when executed by a processor of an apparatus, cause the apparatus to perform any of the methods described herein.

### Brief description of the drawings

Examples of the present disclosure will now be explained with reference to the accompanying drawings in which:
FIG. 1 is a block diagram of an example scientific instrument support module for performing support operations, in accordance with various implementations.
FIG. 2A is a simplified view of an example instrument system in accordance with various implementations.
FIG. 2B is a simplified diagram of an example static field mass filter of the instrument system in accordance with various implementations.
FIGs. 2C, 2D, and 2E are simplified diagrams of the example static field mass filter of FIG. 2B when one or more of the methods of FIGs. 6 to 8 are performed.
FIGs. 2F, 2G, 2H, and 2I are simplified diagrams of alternative implementations to the example static field mass filter of FIG. 2B.
FIG. 3 is an example of a graphical user interface that may be used in the performance of some or all of the methods disclosed herein, in accordance with various implementations.
FIG. 4 is a block diagram of an example computing device that may perform some or all of the methods disclosed herein, in accordance with various implementations.
FIG. 5 is a block diagram of an example scientific instrument support system in which some or all of the methods disclosed herein may be performed, in accordance with various implementations.
FIG. 6A is a flow diagram of an example method of tuning a static field mass filter of a mass spectrometer, in accordance with various implementations.
FIG. 6B is a flow diagram of an example method of adjusting a lens of a static field mass filter of a mass spectrometer, in accordance with various implementations.
FIGs. 7A and 7B are first and second parts of a flow diagram of an example method of adjusting a lens of a static field mass filter of a mass spectrometer, in accordance with various implementations.
FIG. 8 is a flow diagram of an example method of adjusting a lens of a static field mass filter of a mass spectrometer, in accordance with various implementations.
FIG. 9 is a plot of an example ratio used throughout the method of adjusting a lens of a static field mass filter of a mass spectrometer shown in the flow diagram of FIGs. 7A and 7B.

Throughout the description and the drawings, like reference numerals refer to like parts. Implementations are illustrated by way of example, not by way of limitation, in the figures of the accompanying drawings.

### Detailed description

In overview, a method of tuning a static field mass filter of a mass spectrometer, the static field mass filter having a first Wien filter and a second Wien filter, is disclosed herein.

The method comprises injecting a beam of ions into the static field mass filter, adjusting a lens one of the filter, applying a magnetic and an electric field in the first and second Wien filters, adjusting a lens two of the filter, and adjusting a lens three of the filter.

The present approach is for use in a mass spectrometer including a static field mass filter such as that described in EP 3 769 334 B1 (e.g., Thermo Fisher Scientific's "Neoma^{™} MS/MS MC-ICP-MS"). Static field mass filters may apply a constant electric field and apply a magnetic field. This leads to a flat transmission of ions across a selected mass-to-charge ratio (m/z) range, and small deviations in system tuning should not change the measured isotope ratio in an unpredictable way. The static field mass filter is able to select a mass window prior to entry of the ions into a reaction cell. Although masses are separated by static magnetic and electric fields, the complete arrangement of the ion optical pre-filter setup does not introduce a lateral mass discrimination for the selected m/z window at the relatively small input aperture of a reaction cell.

Preferably, the static field mass filter comprises a first and a second Wien filters with an inversion lens between them. This arrangement uses static and not time-dependent (RF-based) ion optics to separate the ions and, as a result of the symmetry between the first and second Wien filters and the use of an inversion lens, mass-to-charge separation introduced within the static field mass filter is nullified at the exit thereof. The resulting instrument may be tuned along the path of the ions, because there is a relatively simple relationship between the electric and magnetic fields, and the mass-to-charge ratio of the ions.

The design of a double Wien-filter preceding the standard Neoma mass spectrometer in the Neoma^{™} MS/MS MC-ICP-MS provides a pre-filter which allows unwanted ion beams, such as Argon (Ar), to be cut from the mass spectrum or to clean a mass range for reacting analytes into this mass area for online chemical separation via a collision cell. Tuning this part of the instrument is important for good performance.

In the case of Neoma^{™} MS/MS a combination of two Wien filters has been chosen for pre-filtering the ions. This is because, to avoid the problem of elements that interfere with the mass shifted analyte ions, a pre-mass-filter with a bandpass characteristic should be used such that only the masses of interest reach the collision cell while ions that interfere with the mass shifted ions are not transmitted. The benefit of using two Wien filters is that it does not require alternating potentials (as in a quadrupole filter) which usually lead to a mass dependent transmission.

Another important function of the pre-filter is to block the intense Ar beam that is apparent in mass spectrometers with a plasma source as early as possible in the ion optics. By blocking the Ar beam the total ion load of the ion beam is greatly reduced, which is beneficial for the resolving power of the instrument and most of all beneficial for the abundance sensitivity.

Optimising the electric and magnetic parameters of the Wien filter is important for the function of the mass spectrometer. Since the double Wien mass filter disperses the ion beam according to the ion masses, it filters out the unwanted ions and cancels out the dispersion of the transmitted ions. The lens parameters should be adjusted carefully in order to transmit all ions with the same transmission efficiency.

An intuitive way of setting the parameters of the mass spectrometer is to inject a beam with known isotope ratios, verify that the expected ratios are present at the output, adjust the parameters of the pre-filter if the ratios are not as expected, and repeat until correct tuning is reached by trial and error. This is impractical, especially because the pre-filter comprises many components, each to be tuned by changing several parameters. A more accurate and less time-consuming procedure is therefore needed.

The approaches described below provide a practical way to optimise the parameters such that all ions are transmitted as close to evenly as possible. This is important for measuring isotope ratios with a multi collector mass spectrometer downstream of a double Wien filter.

Without a careful optimisation not only to maximum intensity but also to an unaffected mass bias for the transmitted ions (same transmission of all ions), the multi collector mass spectrometer downstream of the Wien filter may measure an isotope ratio less accurately.

It is noted that the present disclosure is not limited to mass spectrometers having an ICP ion source but can also be applied to mass spectrometers having an electron ionization ion source, a chemical ionization ion source, an electrospray ion source, a matrix-assisted laser desorption/ionization (MALDI) ion source, a photoionization ion source, a glow discharge ionization sources, a thermal ionization source and/or any other suitable ionization source.

The approaches described herein may be implemented using the system(s) described below.

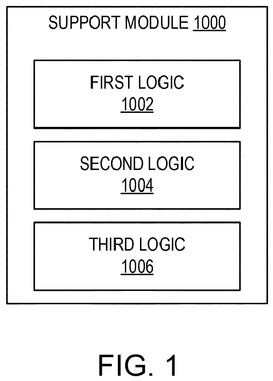

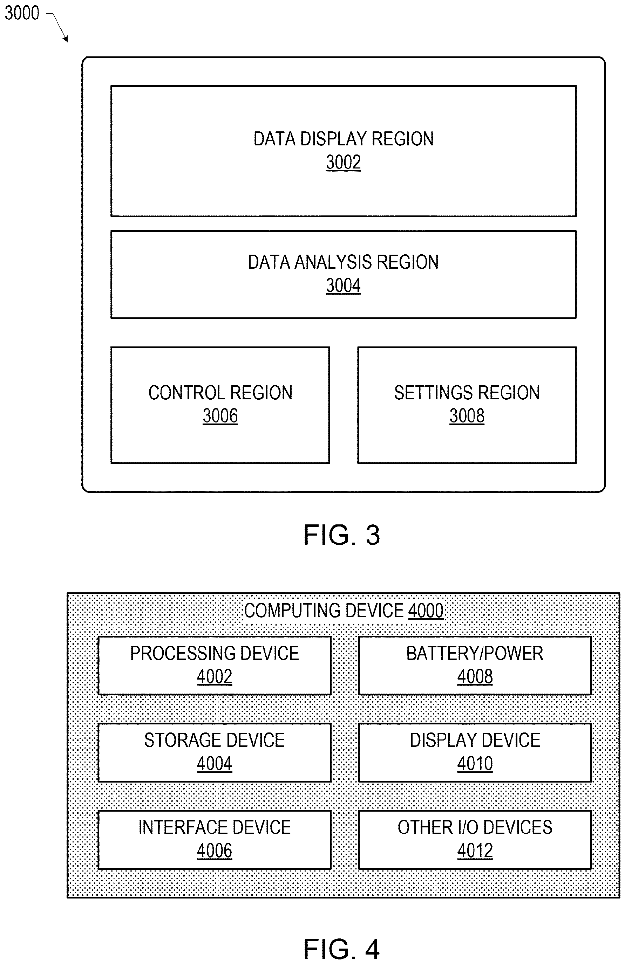

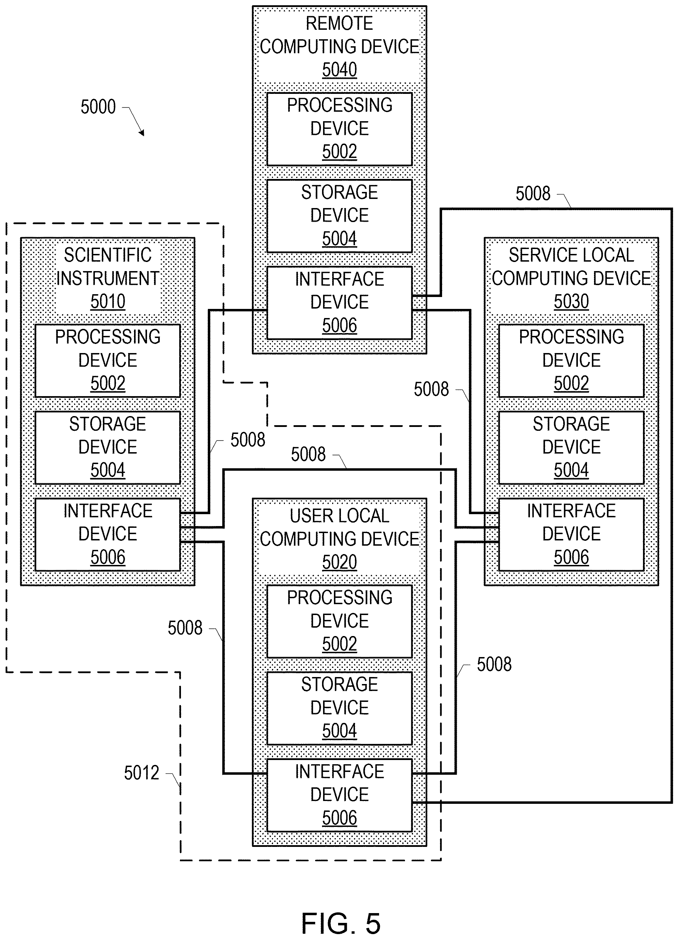

FIG. 1 is a block diagram of a scientific instrument support module 1000 for performing support operations, in accordance with various implementations. The scientific instrument support module 1000 may be implemented by circuitry (e.g., including electrical and/or optical components), such as a programmed computing device. The logic of the scientific instrument support module 1000 may be included in a single computing device, or may be distributed across multiple computing devices that are in communication with each other as appropriate. Examples of computing devices that may, singly or in combination, implement the scientific instrument support module 1000 are discussed herein with reference to the computing device 4000 of FIG. 4. Examples of systems of interconnected computing devices, in which the scientific instrument support module 1000 may be implemented across one or more of the computing devices, are discussed herein with reference to the scientific instrument support system 5000 of FIG. 5.

The scientific instrument support module 1000 may include first logic 1002, second logic 1004, and third logic 1006. As used herein, the term "logic" may include an apparatus that is to perform a set of operations associated with the logic. For example, any of the logic elements included in the support module 1000 may be implemented by one or more computing devices programmed with instructions to cause one or more processing devices of the computing devices to perform the associated set of operations. In a particular implementation, a logic element may include one or more non-transitory computer-readable media having instructions thereon that, when executed by one or more processing devices of one or more computing devices, cause the one or more computing devices to perform the associated set of operations. As used herein, the term "module" may refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module may not include all of the logic elements depicted in the associated drawing; for example, a module may include a subset of the logic elements depicted in the associated drawing when that module is to perform a subset of the operations discussed herein with reference to that module.

As mentioned above, the scientific instrument support module 1000 may be implemented in a system of interconnected computing devices. In such a system, the scientific instrument support module 1000 may interact with a scientific instrument 5010 (the interaction with which is discussed herein with reference to FIG. 5) which may include any appropriate scientific instrument, such as a mass spectrometer 200 having a static field mass filter 204.

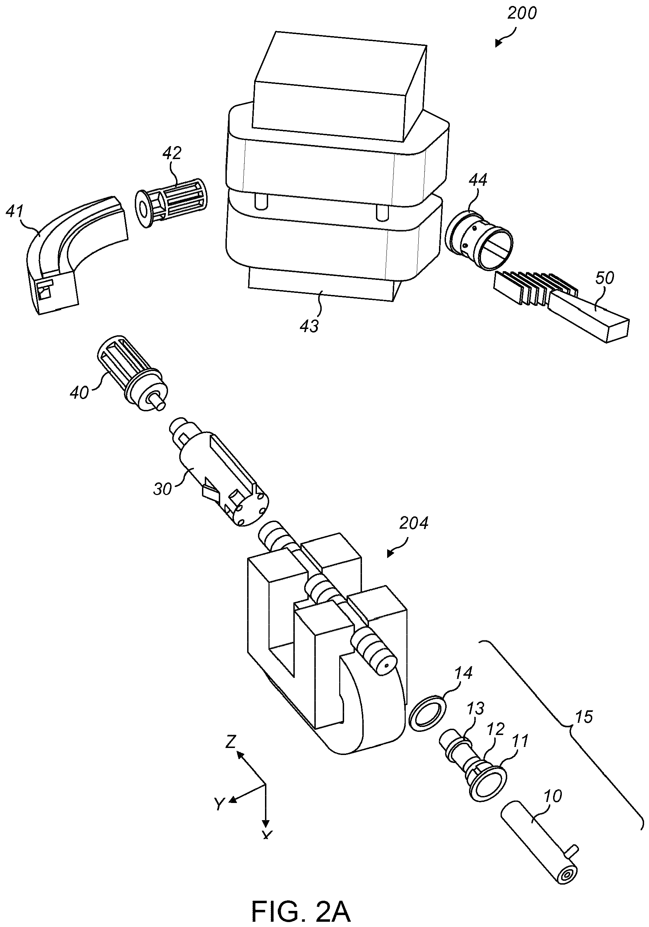

FIG. 2A shows a view of an example mass spectrometer 200 having a static field mass filter 204.

The mass spectrometer 200 includes an ion source 15. The ion source 15 includes a triaxial ICP torch 10, a sampler cone 11, one or more skimmer cones 12, an extraction lens 13 and/or a further skimmer cone 14 and/or another ion optical device 14. This results in a collimated ion beam.

Downstream of the ion source 15, instead of a quadrupole (RF) mass filter, is positioned a static field mass filter 204 which will be described in further detail below. The static field mass filter 204 maintains constant electric and magnetic fields, so that transmission of ions through the static field mass filter has a predictable, and in most cases flat response across the selected m/z range. A quadrupole mass filter does not provide such a flat response. This is because the ions are only influenced by static fields. In a quadrupole mass filter, the electromagnetic fields change with time according to the applied frequency. This results in an approximately sinusoidal trajectory of the ions which are pushed back and forth. Moreover, small deviations in system tuning of the static field mass filter 204 do not change the measured isotope ratio in an unpredictable way. Nevertheless, the static field mass filter 204 does not introduce a lateral mass discrimination (as would happen in, for example, a magnetic sector analyser) so that the ion beam exiting the static field mass filter 204 can be focussed onto the relatively small (c. 2mm) entrance aperture of a collision cell 219, across the width of the mass window selected for transmission by the static field mass filter 204.

Following the collision cell 219, ions are accelerated by an accelerator 40 and focussed into the ion optics of a double focusing high resolution multicollector mass spectrometer for simultaneous detection of different isotopes (of the sample or standards). Further, the double focusing high resolution multicollector mass spectrometer again includes an electrostatic sector 41 and a magnetostatic sector 43, separated by a focussing lens 42. Downstream of the high resolution multicollector mass spectrometer, the arrangement contains dispersion optics 44 and finally a detector platform 50 again, for example, such as that described in GB-A-2,541,391.

The preferred arrangement of a static field mass filter 204 in the arrangement of FIG. 2A is a double Wien filter. Wien filters employ an arrangement of crossed electrostatic and magnetostatic fields. Ions passing through this arrangement are subject to the magnetic Lorentz force and the electric field strength.

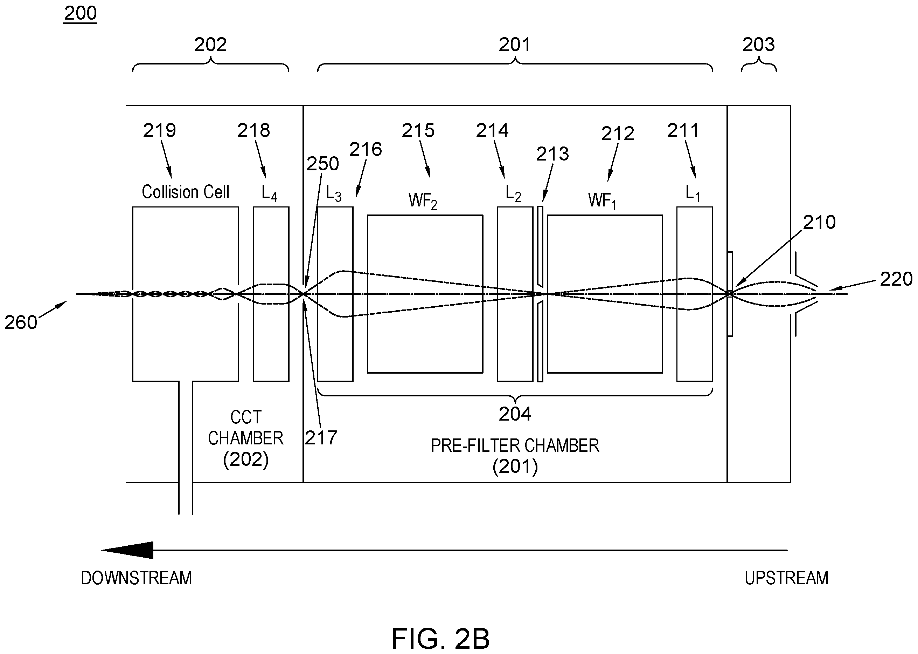

FIG. 2B is simplified diagram of a pre-filter chamber 201 of a mass spectrometer 200 having a static field mass filter 204 in which some or all of the methods disclosed herein may be performed, in accordance with various implementations.

The mass spectrometer also has a collision cell chamber 202 and an extraction area 203, respectively downstream and upstream of the pre-filter chamber 201.

The mass spectrometer 200 may also include a mass analyser (not shown) downstream of the collision cell chamber 202 shown in FIG. 2B.

The pre-filter chamber 201 of the mass spectrometer 200 may comprise an entrance aperture 210, a static field mass filter 204, and an exit aperture 217. The static field mass filter 204 may comprise a lens one 211, a first Wien filter 212, a slit 213 (which can be narrowed to a minimum slit width and widened to a width larger than the minimum slit width), a lens two 214, a second Wien filter 215, and a lens three 216.

The collision cell chamber 202 may comprise a lens four 218 and a collision cell 219.

The extraction area 203 may comprise an extraction lens (not shown) for injecting a beam of ions 220 comprising one or more ion species into the pre-filter chamber 201 through entrance aperture 210.

The beam 220 may pass through the pre-filter chamber 201 and exit from exit aperture 217 to yield beam 250. The beam 250 exiting the pre-filter chamber 201 may enter the collision cell chamber 202. In the collision cell chamber 202, exiting beam 250 may pass through lens four 218 and collision cell 219 to yield beam 260.

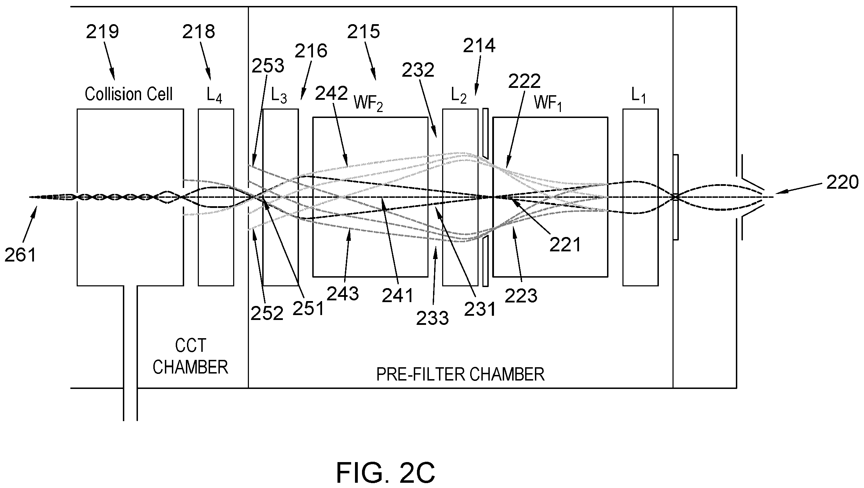

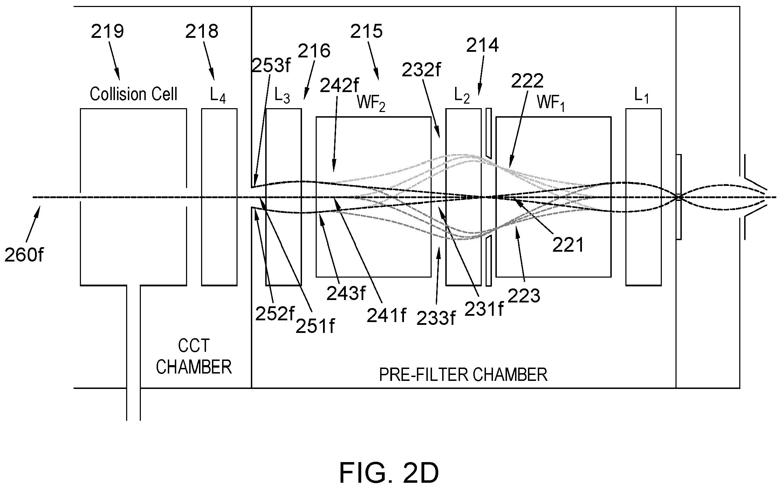

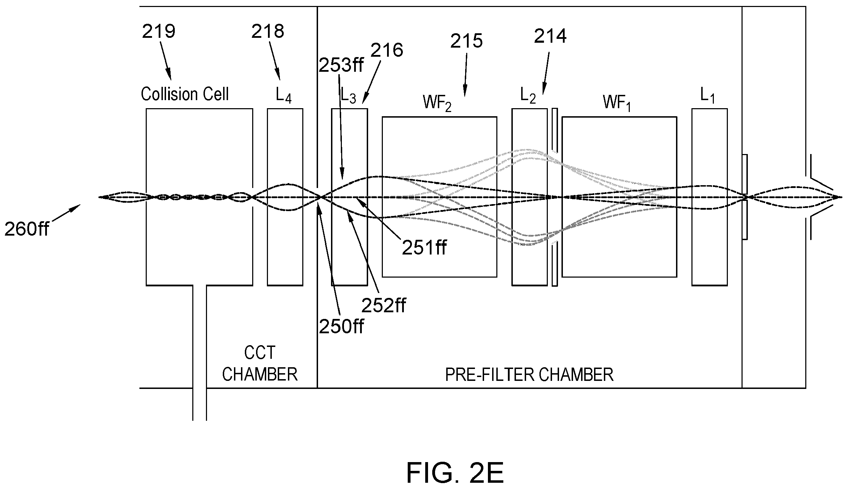

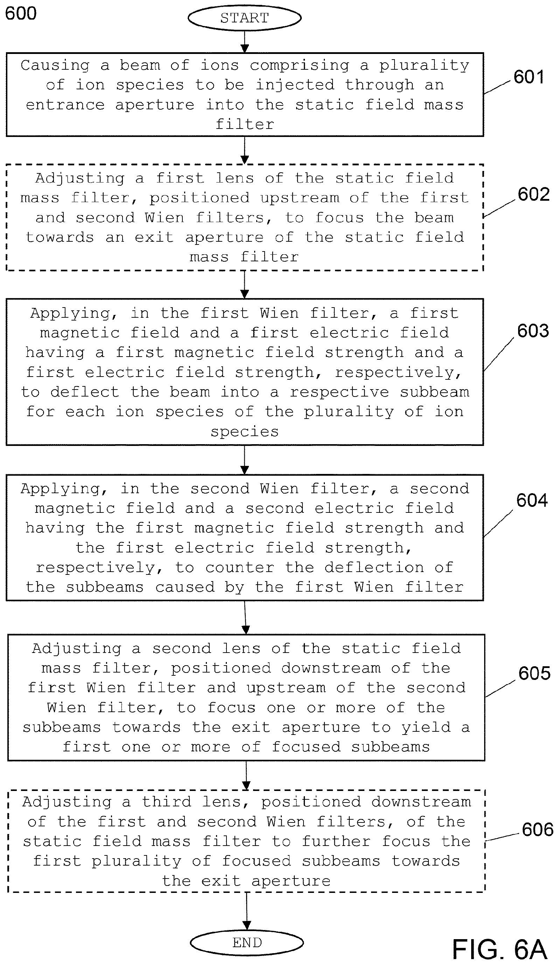

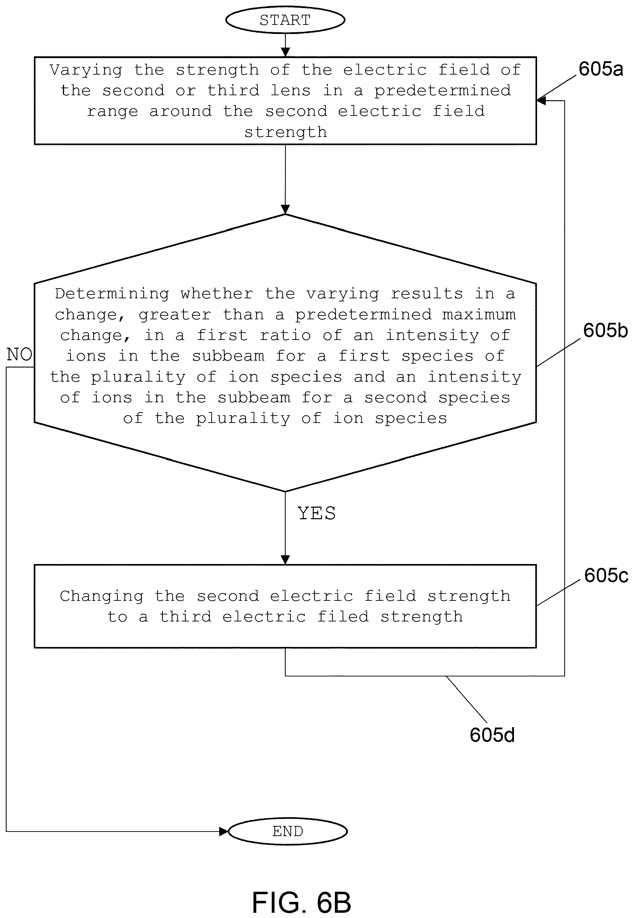

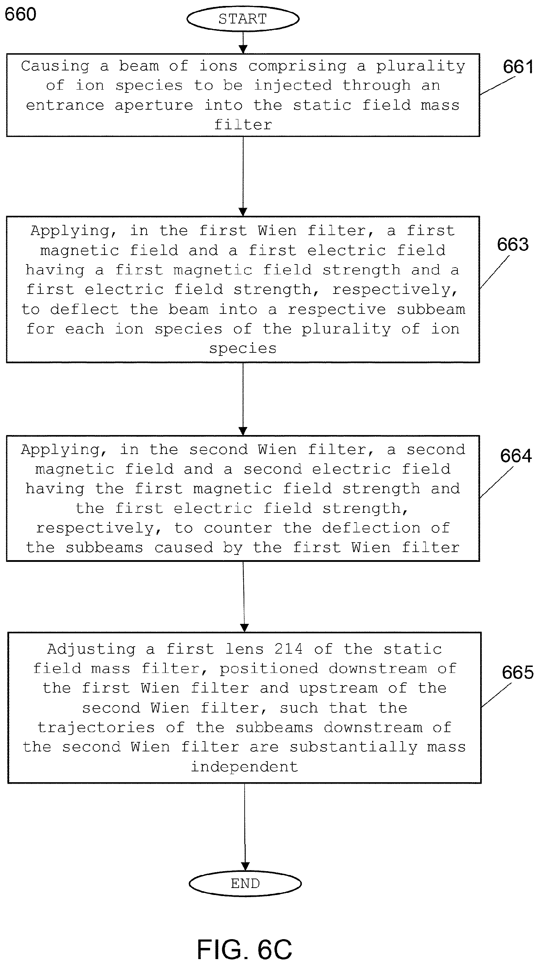

FIGs. 2C, 2D, and 2E, which will be discussed below, show simplified diagrams of the example system of FIG. 2B when one or more of the methods of FIGs. 6 to 8, which will also be discussed below, are performed.

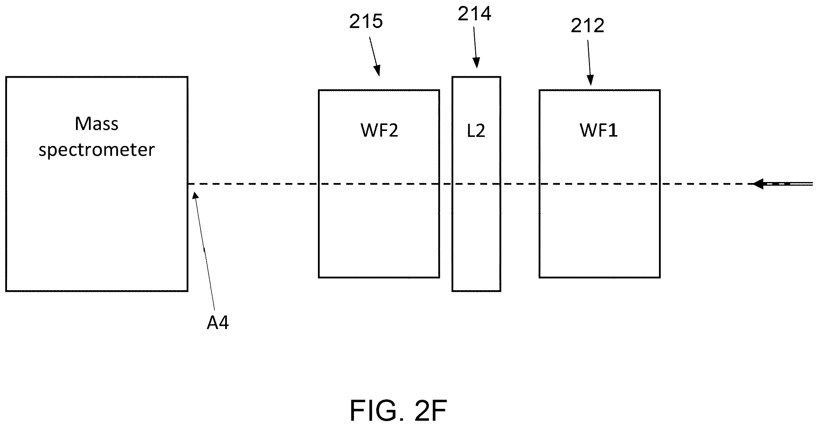

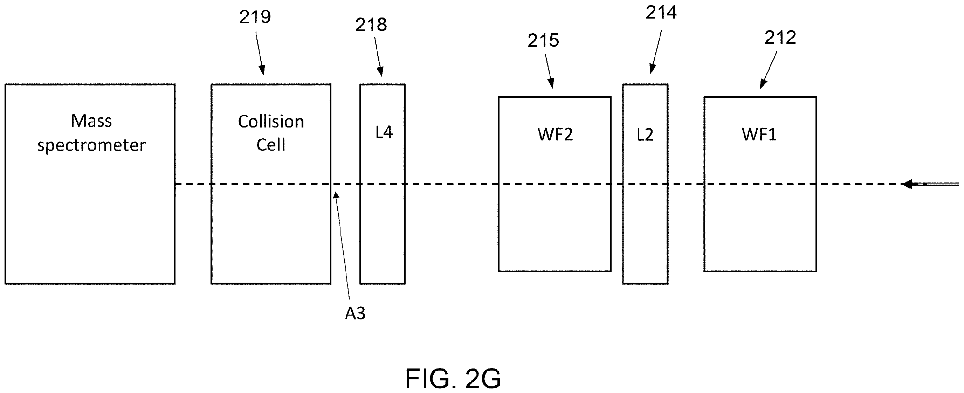

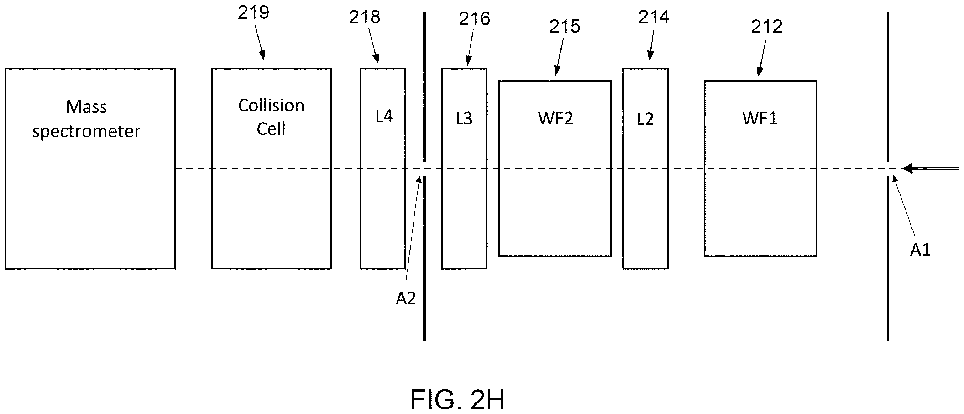

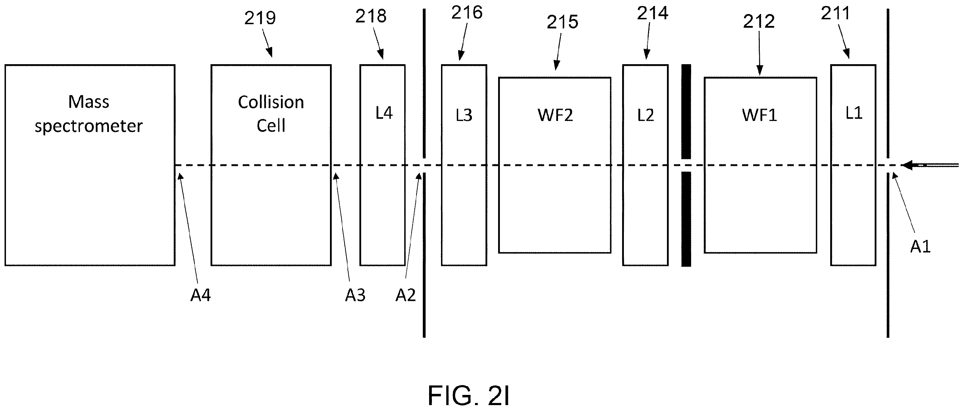

FIGs. 2F, 2G, 2H, and 2I show a series of alternative implementations to the system of FIG. 2B. In these alternative implementations, one or more of the following may be absent: lens one 211, the slit 213, lens three 216, the collision cell 219, and lens four 218. In the embodiment of Fig. 2F, where no collision cell is present, the target of the ion beam can be the mass spectrometer aperture A4. In the embodiment of Fig. 2G, the collision cell aperture A3 may be the target of the ion beam, while in the embodiment of Fig. 2H, the aperture A2 in the partition between the collision cell (CCT) chamber and the pre-filter chamber (compare Fig. 2B) can be the target. The aperture A1 corresponds with the entrance aperture 210 in Fig. 2B.

The methods disclosed herein may include interactions with a human user (e.g., via the user local computing device 5020 discussed herein with reference to FIG. 5). These interactions may include providing information to the user (e.g., information regarding the operation of a scientific instrument such as the scientific instrument 5010 of FIG. 5, information regarding a sample being analysed or other test or measurement performed by a scientific instrument, information retrieved from a local or remote database, or other information) or providing an option for a user to input commands (e.g., to control the operation of a scientific instrument such as the scientific instrument 5010 of FIG. 5, or to control the analysis of data generated by a scientific instrument), queries (e.g., to a local or remote database), or other information. In some implementations, these interactions may be performed through a graphical user interface (GUI) that includes a visual display on a display device (e.g., the display device 4010 discussed herein with reference to FIG. 4) that provides outputs to the user and/or prompts the user to provide inputs (e.g., via one or more input devices, such as a keyboard, mouse, trackpad, or touchscreen, included in the other I/O devices 4012 discussed herein with reference to FIG. 4). The scientific instrument support systems disclosed herein may include any suitable GUIs for interaction with a user.

FIG. 3 depicts an example GUI 3000 that may be used in the performance of some or all of the methods disclosed herein, in accordance with various implementations. As noted above, the GUI 3000 may be provided on a display device (e.g., the display device 4010 discussed herein with reference to FIG. 4) of a computing device (e.g., the computing device 4000 discussed herein with reference to FIG. 4) of a scientific instrument support system (e.g., the scientific instrument support system 5000 discussed herein with reference to FIG. 5), and a user may interact with the GUI 3000 using any suitable input device (e.g., any of the input devices included in the other I/O devices 4012 discussed herein with reference to FIG. 4) and input technique (e.g., movement of a cursor, motion capture, facial recognition, gesture detection, voice recognition, actuation of buttons, etc.).

The GUI 3000 may include a data display region 3002, a data analysis region 3004, a scientific instrument control region 3006, and a settings region 3008. The particular number and arrangement of regions depicted in FIG. 3 is simply illustrative, and any number and arrangement of regions, including any desired features, may be included in a GUI 3000.

The data display region 3002 may display data generated by a scientific instrument (e.g., the scientific instrument 5010 discussed herein with reference to FIG. 5). For example, the data display region 3002 may display any intensities or ratios determined or measured in the approaches described herein.

The data analysis region 3004 may display the results of data analysis (e.g., the results of analysing the data illustrated in the data display region 3002 and/or other data). For example, the data analysis region 3004 may display whether the first and second differences determined in the approaches described herein are within a predetermined difference range. In some implementations, the data display region 3002 and the data analysis region 3004 may be combined in the GUI 3000 (e.g., to include data output from a scientific instrument, and some analysis of the data, in a common graph or region).

The scientific instrument control region 3006 may include options that allow the user to control a scientific instrument (e.g., the scientific instrument 5010 discussed herein with reference to FIG. 5). For example, the scientific instrument control region 3006 may include controls to change the fields applied in the first Wien filter 212 or the second Wien filter 215.

The settings region 3008 may include options that allow the user to control the features and functions of the GUI 3000 (and/or other GUIs) and/or perform common computing operations with respect to the data display region 3002 and data analysis region 3004 (e.g., saving data on a storage device, such as the storage device 4004 discussed herein with reference to FIG. 4, sending data to another user, labelling data, etc.). For example, the settings region 3008 may include settings to switch between automated and manual tuning modes of the mass spectrometer 200.

As noted above, the scientific instrument support module 1000 may be implemented by one or more computing devices. FIG. 4 is a block diagram of a computing device 4000 that may perform some or all of the methods disclosed herein, in accordance with various implementations. In some implementations, the scientific instrument support module 1000 may be implemented by a single computing device 4000 or by multiple computing devices 4000. Further, as discussed below, a computing device 4000 (or multiple computing devices 4000) that implements the scientific instrument support module 1000 may be part of one or more of the scientific instrument 5010, the user local computing device 5020, the service local computing device 5030, or the remote computing device 5040 of FIG. 5.

The computing device 4000 of FIG. 4 is illustrated as having a number of components, but any one or more of these components may be omitted or duplicated, as suitable for the application and setting. In some implementations, some or all of the components included in the computing device 4000 may be attached to one or more motherboards and enclosed in a housing (e.g., including plastic, metal, and/or other materials). In some implementations, some these components may be fabricated onto a single system-on-a-chip (SoC) (e.g., an SoC may include one or more processing devices 4002 and one or more storage devices 4004). Additionally, in various implementations, the computing device 4000 may not include one or more of the components illustrated in FIG. 4, but may include interface circuitry (not shown) for coupling to the one or more components using any suitable interface (e.g., a Universal Serial Bus (USB) interface, a High-Definition Multimedia Interface (HDMI) interface, a Controller Area Network (CAN) interface, a Serial Peripheral Interface (SPI) interface, an Ethernet interface, a wireless interface, or any other appropriate interface). For example, the computing device 4000 may not include a display device 4010, but may include display device interface circuitry (e.g., a connector and driver circuitry) to which a display device 4010 may be coupled.

The computing device 4000 may include a processing device 4002 (e.g., one or more processing devices). As used herein, the term "processing device" may refer to any device or portion of a device that processes electronic data from registers and/or memory to transform that electronic data into other electronic data that may be stored in registers and/or memory. The processing device 4002 may include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices.

The computing device 4000 may include a storage device 4004 (e.g., one or more storage devices). The storage device 4004 may include one or more memory devices such as random access memory (RAM) (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In some implementations, the storage device 4004 may include memory that shares a die with a processing device 4002. In such an implementation, the memory may be used as cache memory and may include embedded dynamic random access memory (eDRAM) or spin transfer torque magnetic random access memory (STT-MRAM), for example. In some implementations, the storage device 4004 may include computer readable media having instructions thereon that, when executed by one or more processing devices (e.g., the processing device 4002), cause the computing device 4000 to perform any appropriate ones of or portions of the methods disclosed herein. The computer-readable media may be transitory (e.g., a wire or a wireless propagation medium in which a signal is being transmitted) or non-transitory.

The computing device 4000 may include an interface device 4006 (e.g., one or more interface devices 4006). The interface device 4006 may include one or more communication chips, connectors, and/or other hardware and software to govern communications between the computing device 4000 and other computing devices. For example, the interface device 4006 may include circuitry for managing wireless communications for the transfer of data to and from the computing device 4000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some implementations they might not. Circuitry included in the interface device 4006 for managing wireless communications may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). In some implementations, circuitry included in the interface device 4006 for managing wireless communications may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In some implementations, circuitry included in the interface device 4006 for managing wireless communications may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In some implementations, circuitry included in the interface device 4006 for managing wireless communications may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In some implementations, the interface device 4006 may include one or more antennas (e.g., one or more antenna arrays) for receipt and/or transmission of wireless communications.

In some implementations, the interface device 4006 may include circuitry for managing wired communications, such as electrical, optical, or any other suitable communication protocols. For example, the interface device 4006 may include circuitry to support communications in accordance with Ethernet technologies. In some implementations, the interface device 4006 may support both wireless and wired communication, and/or may support multiple wired communication protocols and/or multiple wireless communication protocols. For example, a first set of circuitry of the interface device 4006 may be dedicated to shorter-range wireless communications such as Wi-Fi or Bluetooth, and a second set of circuitry of the interface device 4006 may be dedicated to longer-range wireless communications such as global positioning system (GPS), EDGE, GPRS, CDMA, WiMAX, LTE, EV-DO, or others. In some implementations, a first set of circuitry of the interface device 4006 may be dedicated to wireless communications, and a second set of circuitry of the interface device 4006 may be dedicated to wired communications.

The computing device 4000 may include battery/power circuitry 4008. The battery/power circuitry 4008 may include one or more energy storage devices (e.g., batteries or capacitors) and/or circuitry for coupling components of the computing device 4000 to an energy source separate from the computing device 4000 (e.g., AC line power).

The computing device 4000 may include a display device 4010 (e.g., multiple display devices). The display device 4010 may include any visual indicators, such as a heads-up display, a computer monitor, a projector, a touchscreen display, a liquid crystal display (LCD), a light-emitting diode (LED) display, or a flat panel display.

The computing device 4000 may include other input/output (I/O) devices 4012. The other I/O devices 4012 may include one or more audio output devices (e.g., speakers, headsets, earbuds, alarms, etc.), one or more audio input devices (e.g., microphones or microphone arrays), location devices (e.g., GPS devices in communication with a satellite-based system to receive a location of the computing device 4000, as known in the art), audio codecs, video codecs, printers, sensors (e.g., thermocouples or other temperature sensors, humidity sensors, pressure sensors, vibration sensors, accelerometers, gyroscopes, etc.), image capture devices such as cameras, keyboards, cursor control devices such as a mouse, a stylus, a trackball, or a touchpad, bar code readers, Quick Response (QR) code readers, or radio frequency identification (RFID) readers, for example.

The computing device 4000 may have any suitable form factor for its application and setting, such as a handheld or mobile computing device (e.g., a cell phone, a smart phone, a mobile internet device, a tablet computer, a laptop computer, a netbook computer, an ultrabook computer, a personal digital assistant (PDA), an ultramobile personal computer, etc.), a desktop computing device, or a server computing device or other networked computing component.

One or more computing devices implementing any of the scientific instrument support modules or methods disclosed herein may be part of a scientific instrument support system. FIG. 5 is a block diagram of an example scientific instrument support system 5000 in which some or all of the methods disclosed herein may be performed, in accordance with various implementations. The scientific instrument support modules and methods disclosed herein (e.g., the scientific instrument support module 1000 of FIG. 1 and the method 600 of FIG. 6A) may be implemented by one or more of the scientific instrument 5010, the user local computing device 5020, the service local computing device 5030, or the remote computing device 5040 of the scientific instrument support system 5000.

Any of the scientific instrument 5010, the user local computing device 5020, the service local computing device 5030, or the remote computing device 5040 may include any of the implementations of the computing device 4000 discussed herein with reference to FIG. 4, and any of the scientific instrument 5010, the user local computing device 5020, the service local computing device 5030, or the remote computing device 5040 may take the form of any appropriate ones of the implementations of the computing device 4000 discussed herein with reference to FIG. 4.

The scientific instrument 5010, the user local computing device 5020, the service local computing device 5030, or the remote computing device 5040 may each include a processing device 5002, a storage device 5004, and an interface device 5006. The processing device 5002 may take any suitable form, including the form of any of the processing devices 4002 discussed herein with reference to FIG. 4, and the processing devices 5002 included in different ones of the scientific instrument 5010, the user local computing device 5020, the service local computing device 5030, or the remote computing device 5040 may take the same form or different forms. The storage device 5004 may take any suitable form, including the form of any of the storage devices 5004 discussed herein with reference to FIG. 4, and the storage devices 5004 included in different ones of the scientific instrument 5010, the user local computing device 5020, the service local computing device 5030, or the remote computing device 5040 may take the same form or different forms. The interface device 5006 may take any suitable form, including the form of any of the interface devices 4006 discussed herein with reference to FIG. 4, and the interface devices 5006 included in different ones of the scientific instrument 5010, the user local computing device 5020, the service local computing device 5030, or the remote computing device 5040 may take the same form or different forms.

The scientific instrument 5010, the user local computing device 5020, the service local computing device 5030, and the remote computing device 5040 may be in communication with other elements of the scientific instrument support system 5000 via communication pathways 5008. The communication pathways 5008 may communicatively couple the interface devices 5006 of different ones of the elements of the scientific instrument support system 5000, as shown, and may be wired or wireless communication pathways (e.g., in accordance with any of the communication techniques discussed herein with reference to the interface devices 4006 of the computing device 4000 of FIG. 4). The particular scientific instrument support system 5000 depicted in FIG. 5 includes communication pathways between each pair of the scientific instrument 5010, the user local computing device 5020, the service local computing device 5030, and the remote computing device 5040, but this "fully connected" implementation is simply illustrative, and in various implementations, various ones of the communication pathways 5008 may be absent. For example, in some implementations, a service local computing device 5030 may not have a direct communication pathway 5008 between its interface device 5006 and the interface device 5006 of the scientific instrument 5010, but may instead communicate with the scientific instrument 5010 via the communication pathway 5008 between the service local computing device 5030 and the user local computing device 5020 and the communication pathway 5008 between the user local computing device 5020 and the scientific instrument 5010.

The scientific instrument 5010 may include any appropriate scientific instrument, such as mass spectrometer 200 having static field mass filter 204.

The user local computing device 5020 may be a computing device (e.g., in accordance with any of the implementations of the computing device 4000 discussed herein) that is local to a user of the scientific instrument 5010. In some implementations, the user local computing device 5020 may also be local to the scientific instrument 5010, but this need not be the case; for example, a user local computing device 5020 that is in a user's home or office may be remote from, but in communication with, the scientific instrument 5010 so that the user may use the user local computing device 5020 to control and/or access data from the scientific instrument 5010. In some implementations, the user local computing device 5020 may be a laptop, smartphone, or tablet device. In some implementations the user local computing device 5020 may be a portable computing device.

The service local computing device 5030 may be a computing device (e.g., in accordance with any of the implementations of the computing device 4000 discussed herein) that is local to an entity that services the scientific instrument 5010. For example, the service local computing device 5030 may be local to a manufacturer of the scientific instrument 5010 or to a third-party service company. In some implementations, the service local computing device 5030 may communicate with the scientific instrument 5010, the user local computing device 5020, and/or the remote computing device 5040 (e.g., via a direct communication pathway 5008 or via multiple "indirect" communication pathways 5008, as discussed above) to receive data regarding the operation of the scientific instrument 5010, the user local computing device 5020, and/or the remote computing device 5040 (e.g., the results of self-tests of the scientific instrument 5010, calibration coefficients used by the scientific instrument 5010, the measurements of sensors associated with the scientific instrument 5010, etc.). In some implementations, the service local computing device 5030 may communicate with the scientific instrument 5010, the user local computing device 5020, and/or the remote computing device 5040 (e.g., via a direct communication pathway 5008 or via multiple "indirect" communication pathways 5008, as discussed above) to transmit data to the scientific instrument 5010, the user local computing device 5020, and/or the remote computing device 5040 (e.g., to update programmed instructions, such as firmware, in the scientific instrument 5010, to initiate the performance of test or calibration sequences in the scientific instrument 5010, to update programmed instructions, such as software, in the user local computing device 5020 or the remote computing device 5040, etc.). A user of the scientific instrument 5010 may utilize the scientific instrument 5010 or the user local computing device 5020 to communicate with the service local computing device 5030 to report a problem with the scientific instrument 5010 or the user local computing device 5020, to request a visit from a technician to improve the operation of the scientific instrument 5010, to order consumables or replacement parts associated with the scientific instrument 5010, or for other purposes.

The remote computing device 5040 may be a computing device (e.g., in accordance with any of the implementations of the computing device 4000 discussed herein) that is remote from the scientific instrument 5010 and/or from the user local computing device 5020. In some implementations, the remote computing device 5040 may be included in a datacentre or other large-scale server environment. In some implementations, the remote computing device 5040 may include network-attached storage (e.g., as part of the storage device 5004). The remote computing device 5040 may store data generated by the scientific instrument 5010, perform analyses of the data generated by the scientific instrument 5010 (e.g., in accordance with programmed instructions), facilitate communication between the user local computing device 5020 and the scientific instrument 5010, and/or facilitate communication between the service local computing device 5030 and the scientific instrument 5010.

In some implementations, one or more of the elements of the scientific instrument support system 5000 illustrated in FIG. 5 may not be present. Further, in some implementations, multiple ones of various ones of the elements of the scientific instrument support system 5000 of FIG. 5 may be present. For example, a scientific instrument support system 5000 may include multiple user local computing devices 5020 (e.g., different user local computing devices 5020 associated with different users or in different locations). In another example, a scientific instrument support system 5000 may include multiple scientific instruments 5010, all in communication with service local computing device 5030 and/or a remote computing device 5040; in such an implementation, the service local computing device 5030 may monitor these multiple scientific instruments 5010, and the service local computing device 5030 may cause updates or other information to be "broadcast" to multiple scientific instruments 5010 at the same time. Different ones of the scientific instruments 5010 in a scientific instrument support system 5000 may be located close to one another (e.g., in the same room) or farther from one another (e.g., on different floors of a building, in different buildings, in different cities, etc.). In some implementations, a scientific instrument 5010 may be connected to an Internet-of-Things (IoT) stack that allows for command and control of the scientific instrument 5010 through a web-based application, a virtual or augmented reality application, a mobile application, and/or a desktop application. Any of these applications may be accessed by a user operating the user local computing device 5020 in communication with the scientific instrument 5010 by the intervening remote computing device 5040. In some implementations, a scientific instrument 5010 may be sold by the manufacturer along with one or more associated user local computing devices 5020 as part of a local scientific instrument computing unit 5012.

In some implementations, different ones of the scientific instruments 5010 included in a scientific instrument support system 5000 may be different types of scientific instruments 5010. In some such implementations, the remote computing device 5040 and/or the user local computing device 5020 may combine data from different types of scientific instruments 5010 included in a scientific instrument support system 5000.

As mentioned above, methods may be performed using scientific instrument support system 5000. A method 600 of tuning a static field mass filter 204 of a mass spectrometer 200 comprises steps 601 to 606 shown in FIG 6A. An alternative method 660 of tuning a static field mass filter 204 of a mass spectrometer 200 comprises steps 601 to 606 shown in FIG 6C. The static field mass filter 204 may have the first Wien filter 212 and the second Wien filter 215.

At step 601 or 661, a beam of ions 220 comprising a plurality of ion species may be caused to be injected through the entrance aperture 210 into the static field mass filter 204. The beam may be injected using injection means 209 (e.g., an extraction lens). The beam may be injected in the direction of an exit aperture 217 of the static field mass filter 204. The beam may, for example, be caused to be injected by sending a message to the mass spectrometer 200 to instruct the mass spectrometer 200 to inject a beam using injection means 209.

Optionally, at step 602, lens one 211 of the static field mass filter 204, positioned upstream of the first and second Wien filters 212 and 215, may be adjusted to focus the beam 220 towards the exit aperture 217 of the static field mass filter 204.

FIG. 2B shows the ion trajectories after tuning lens one. An ion beam 220 is injected along a central axis 205 of the static field mass filter 204. With this optimal beam projection, the ion beam is injected from the extraction area 203, through all apertures (entrance aperture 210 and exit aperture 217), and into the collision cell chamber 202.

At step 603 or 663, in the first Wien filter 212, a first magnetic field and a first electric field having a first magnetic field strength and a first electric field strength, respectively, may be applied to deflect the beam 220 into a respective subbeam 221, 222, 223 for each ion species of the plurality of ion species.

At step 604 or 664, in the second Wien filter 215, a second magnetic field and a second electric field having the first magnetic field strength and the first electric field strength, respectively, may be applied to counter the deflection of the subbeams caused by the first Wien filter 212 and yield subbeams 241, 242, 243.

FIG. 2C shows the ion trajectories after applying a magnetic and electric field in the first and second Wien filters 212 and 215. After activating the static field mass filter 204 and before adjusting any more parameters other than maximizing the intensity of the ion mass of interest, the ion trajectory in the central beam (220, 221, 231, 241, 251, 261), corresponding to the central mass of the static field mass filter 204, is still well focused. The other ion species (of subbeams 232, 242, 252 and 233, 243, 253) separated by the static field mass filter 204 are not focused towards the downstream exit aperture 217 because lens two 214 has not yet been tuned.

At step 605 or 665, lens two 214 of the static field mass filter 204, positioned downstream of the first Wien filter 212 and upstream of the second Wien filter 215, may be adjusted to focus one or more of the subbeams towards the exit aperture 217 to yield one or more focused subbeams 231f, 232f, 233f (which after being realigned by the second Wien filter 215 may yield focused subbeams 241f, 242f, 243f). In other words, lens two 214 of the static field mass filter 204, positioned downstream of the first Wien filter 212 and upstream of the second Wien filter 215, may be adjusted such that the trajectories of the subbeams downstream of the second Wien filter are substantially mass independent. Additionally, lens two 214 may be adjusted to focus one or more of the subbeams into the second Wien filter 215.

Tuning lens two is an important step. The mass dispersion of the ions of interest should be countered by the second Wien filter 215 after appropriately tuning lens two 214, otherwise any result of an isotope ratio measurement with the downstream mass spectrometer may be compromised.

FIG. 2D shows the ion trajectories after adjusting lens two 214. The ions are deflected in the first Wien filter 212 and their deflection is countered in the second Wien filter 215 when lens two 214 is correctly adjusted. However, the projection (251f, 252f, 253f) of the ion beam coming from the extraction lens may no longer be optimal after lens two 214 has been adjusted. Indeed, it may be that only focused subbeam 251f passes through lens four 218 and collision cell 219 to yield beam 260f.

Optionally, at step 606, lens three 216 of the static field mass filter 204, positioned downstream of the first and second Wien filters 212 and 215, may be adjusted to further focus the one or more focused subbeams (251f, 252f, 253f) towards the exit aperture 217 and yield one or more further-focused subbeams 251ff, 252ff, 253ff. This should result in subbeams 251ff, 252ff, 253ff being focused into beam 250ff, which is beam 250 after being fully focused towards the exit aperture 217.

FIG. 2E shows the ion trajectories after adjusting lens three 216 (and optionally a lens four 218 of the collision cell chamber). All isotope trajectories (251ff, 252ff, 253ff) run on the same path 250ff after the static field mass filter and are optimally projected through the apertures and into the collision cell chamber. Beam 250ff may pass through lens four 218 and collision cell 219 to yield beam 260ff. It will be understood that when all ion trajectories, such as isotope trajectories, follow essentially the same path, the ion trajectories are substantially mass independent. It will further be understood that substantially mass independent trajectories allow multiple subbeams to be focused on the same target, such as the same aperture.

Those skilled in the art will recognise that the steps of method 600 are presented in a particular order but may be carried out in another order. When carried out in such another order, the results of the above approach may be suboptimal, but nevertheless useful.

Those skilled in the art will recognise that certain optional steps of method 600 need not be performed when the static field mass filter is implemented as shown in FIGs. 2F, 2G, 2H, and 2I. In these alternative implementations to the system of FIG. 2B, one or more of the following may be absent: lens one 211, the slit 213, lens three 216, the collision cell 219, or lens four 218. In such a case, these components do not need to be adjusted in method 600 for tuning a static field mass filter 204 of a mass spectrometer 200. An example of a method performed when one or more of these components are absent is shown in FIG. 6C, discussing method 660.

The adjustment of lens two or three of the static field mass filter 204 of steps 605 or 606 may be carried out according to steps 605a to 605d shown in FIG. 6B.

A third electric field having a second electric field strength may be applied in lens two 214 or three 216.

At step 605a, the strength of the electric field of lens two 214 or three 216 may be varied in a predetermined range including (e.g., centred around) the second electric field strength to move the ion beam across the exit aperture 217 (if that moving leads to a change in the isotope ratios, it may be an indication that there are ion beams having different trajectories and that the setting of lens two may not be optimal).

For example, the electric field may be varied by a given amount (e.g., 5%) above and below the second electric field strength, the aim being to tune lens two 214 or three 216 such that the given change of the electric field strength does not lead to a change in a ratio of an intensity of ions in the subbeam for a first species of the plurality of ion species and an intensity of ions in the subbeam for a second species of the plurality of ion species.

At step 605b, it may be determined whether the varying results in a change, greater than a predetermined maximum change, in a first ratio of an intensity of ions in the subbeam for a first species of the plurality of ion species and an intensity of ions in the subbeam for a second species of the plurality of ion species. If the varying does not lead to a change in the first ratio greater than the predetermined maximum change, then steps 605c and 605d may not be performed and the method may continue with step 606 or 605 of method 600. If the varying does lead to a change in the first ratio greater than the predetermined maximum change, then steps 605c and 605d may be performed.

At step 605c, in lens two 214 or three 216, the second electric field strength may be changed to a third electric field strength.

Step 605d in FIG. 6B indicates that steps 605a to 605b (or to 605d) may be repeated until it is determined that the varying of the electric field does not lead to a change in the first ratio greater than the predetermined maximum change.

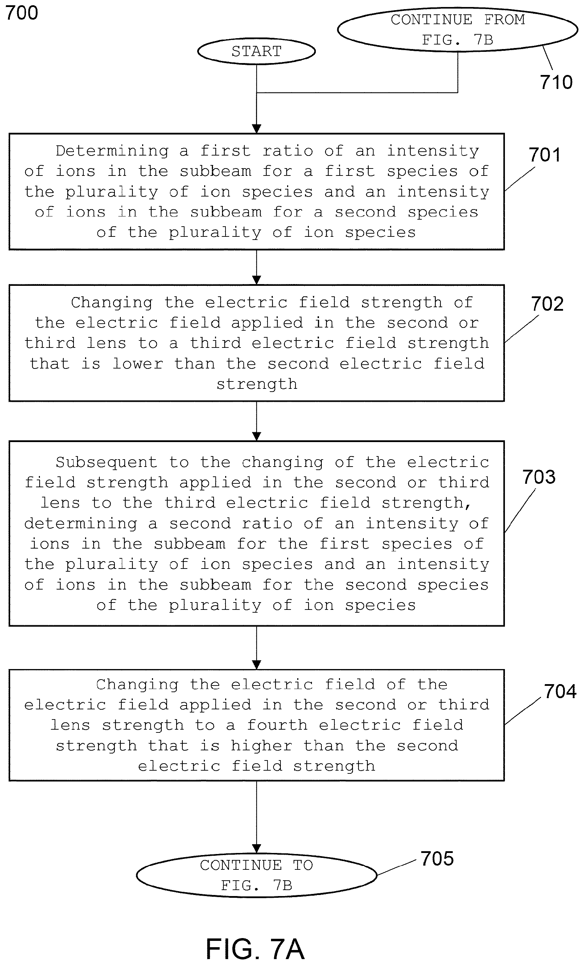

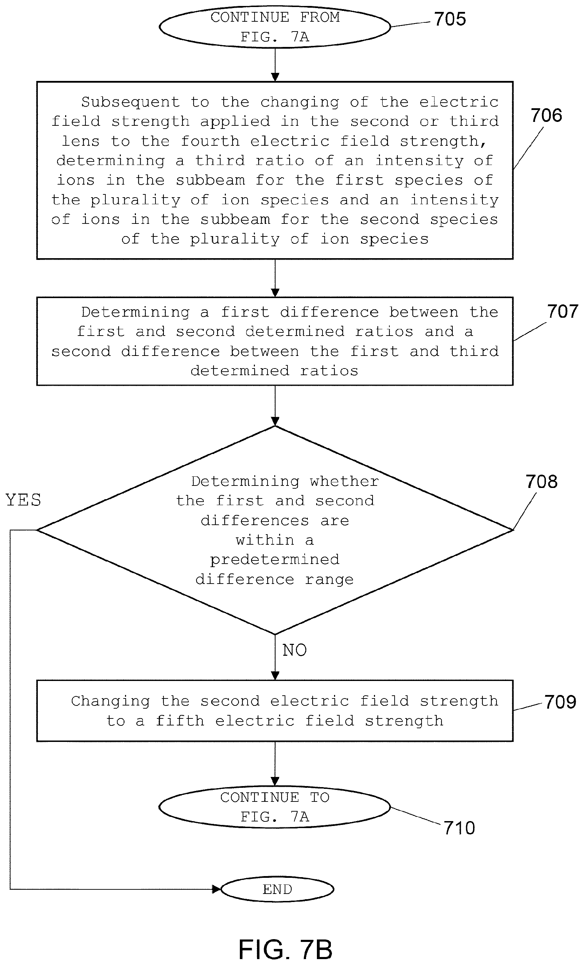

The adjustment of lens two or three of the static field mass filter of steps 605 or 606, and/or of steps 605a to 605d, may be carried out according to a method 700 comprising steps 701 to 710 shown in FIG. 7A and 7B.

A third electric field having a second electric field strength may be applied in lens two 214 or three 216.

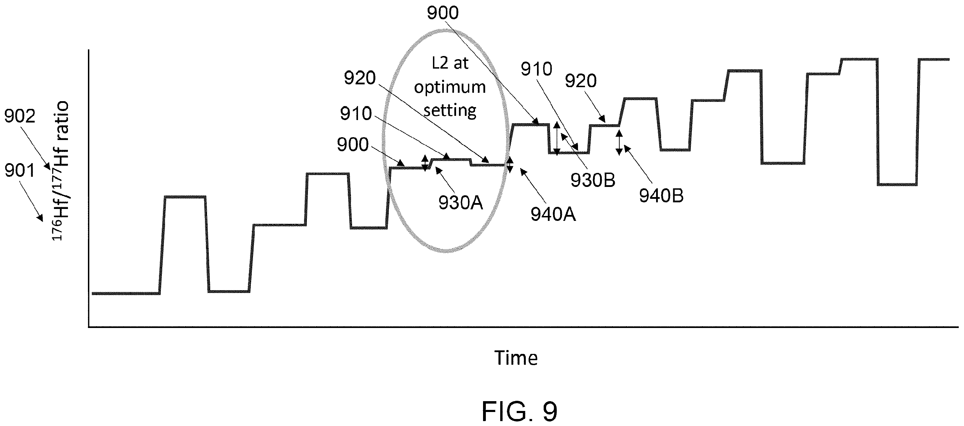

Referring first to FIG. 7A, at step 701, a first ratio 900 of an intensity of ions in the subbeam for a first species 901 of the plurality of ion species and an intensity of ions in the subbeam for a second species 902 of the plurality of ion species may be determined. An example of a ratio used throughout method 700 is shown in FIG. 9. FIG. 9 shows:
L2 lens from -400V to -460V, delta 10V
L3Y +8V, +13V, +8V at each L2 setting.

At step 702, the electric field strength of the electric field applied in lens two 214 or three 216 may be changed to a third electric field strength that is lower than the second electric field strength.

At step 703, subsequent to the changing 702 of the electric field strength applied in lens two 214 or three 216 to the third electric field strength, a second ratio 910 of an intensity of ions in the subbeam for the first species 901 of the plurality of ion species and an intensity of ions in the subbeam for the second species 902 of the plurality of ion species may be determined.

At step 704, the electric field strength of the electric field applied in lens two or three may be changed to a fourth electric field strength that is higher than the second electric field strength.

Step 705 in FIG. 7A indicates that the method 700 continues in FIG. 7B.

Referring then to FIG. 7B, at step 706, subsequent to the changing 704 of the electric field strength applied in lens two 214 or three 216 to the fourth electric field strength, a third ratio 920 of an intensity of ions in the subbeam for the first species 901 of the plurality of ion species and an intensity of ions in the subbeam for the second species 902 of the plurality of ion species may be determined.

At step 707, a first difference 930A/930B between the first 900 and second 910 determined ratios and a second 940A/940B difference between the first 900 and third 920 determined ratios may be determined.

At step 708, it may be determined whether the first 930A/930B and second 940A/940B differences are within a predetermined difference range. If the first 930A and second 940A differences are within a predetermined difference range, then steps 709 and 710 may not be performed and the method may continue with step 606 or 605 of method 600. If the first 930B and second differences 940B are not within a predetermined difference range, then steps 709 and 710 may be performed.

At step 709, the second electric field may be changed to a fifth electric field strength. The fifth electric field strength may be determined using a search algorithm, such as a binary or linear search algorithm.

Step 710 in FIG. 7A and FIG. 7B indicates that steps 701 to 708 (or to 710) may be repeated until it is determined that the first 930B and second 940B differences are within the predetermined difference range.

Those skilled in the art will recognise that the steps of method 700 are presented in a particular order but may be carried out in another order. In particular, although steps 702 and 703 are presented before steps 704 and 706, steps 704 and 706 may instead be carried out before steps 702 and 703.

In some implementations described herein, adjusting a lens may comprise adjusting the deflection or the position of the lens. The deflection may be adjusted in one or more directions perpendicular to a central axis 205 of the static field mass filter 204.

In some implementations described herein, the static field mass filter 204 may have a central axis 205, the entrance and exit apertures 210 and 217 of the static field mass filter 204 may be aligned on the central axis 205, and the beam of ions may be injected into the static field mass filter 204 along the central axis 205. Additionally, adjusting lens one of the static field mass filter may be to focus the beam of ions towards the exit aperture 217 of the static field mass filter 204 and to ensure that the beam passes through the first and second Wien filters 212 and 215 on the central axis 205 of the static field mass filter 204.

In some implementations described herein, adjusting lens two 214 of the static field mass filter 204 may be to focus one or more of the subbeams towards the exit aperture 217 and into the second Wien filter 215.

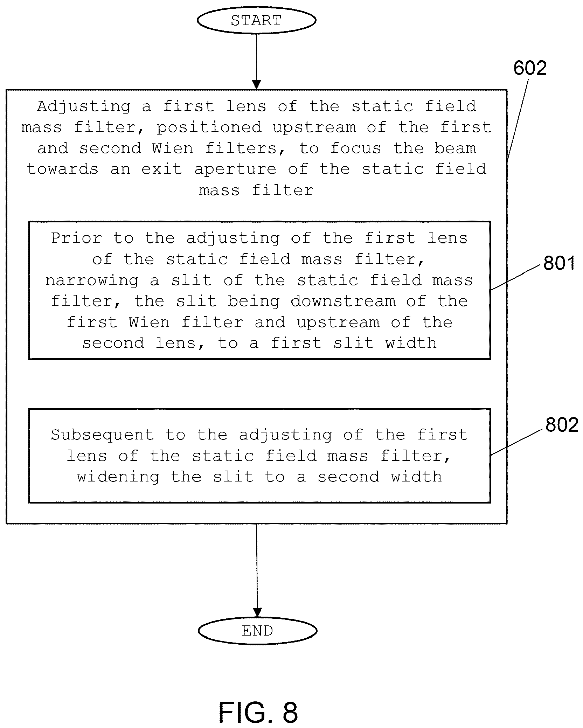

In some implementations, adjusting lens one 211 of the static field mass filter 204 may comprise steps 801 and 802 shown in FIG. 8. At step 801, the slit 213 of the static field mass filter 204 may be narrowed (or 'closed') to a minimum slit width. At step 802, lens one 211 of the static field mass filter 204 may be adjusted, for example as in step 605. At step 803, subsequent to the adjusting of lens one 211 of the static field mass filter 204, the slit 213 may be widened (or 'opened') to a width larger than the minimum slit width.

At step 801, prior to the adjusting 602 of lens one 211 of the static field mass filter 204, the slit 213 of the static field mass filter 204 may be narrowed to a first slit width, the slit 213 being downstream of the first Wien filter 212 and upstream of lens two 214. At step 802, subsequent to the adjusting of lens two of the static field mass filter 204, the slit 213 may be widened to a second width. The first width may be the minimum width at which the slit 213 can be narrowed. Narrowing the slit 213 may be to ensure that subbeams deflected away from the central axis 205 of the static field mass filter 204 are substantially unable to pass from the first Wien filter 212 into lens two 214.

Various operations may be described as multiple discrete actions or operations in turn, in a manner that is most helpful in understanding the subject matter disclosed herein. However, the order of description should not be construed as to imply that these operations are necessarily order dependent. In particular, these operations may not be performed in the order of presentation. Operations described may be performed in a different order from the described implementation. Various additional operations may be performed, and/or described operations may be omitted in additional implementations. Operations are illustrated once each and in a particular order in FIGs. 6A, 6B, 7A, 7B, and 8, but the operations may be reordered and/or repeated as desired and appropriate (e.g., different operations performed may be performed in parallel, as suitable).

The approaches described herein may be embodied on a computer-readable medium, which may be a non-transitory computer-readable medium. The computer-readable medium carries computer-readable instructions arranged for execution upon a processor so as to make the processor carry out any or all of the methods described herein. The computer-readable medium may be transitory (e.g., a wire or a wireless propagation medium in which a signal is being transmitted) or non-transitory.

The term "computer-readable medium" as used herein refers to any medium that stores data and/or instructions for causing a processor to operate in a specific manner. Such storage medium may comprise non-volatile media and/or volatile media. Non-volatile media may include, for example, optical or magnetic disks. Volatile media may include dynamic memory. Exemplary forms of storage medium include, a floppy disk, a flexible disk, a hard disk, a solid state drive, a magnetic tape, or any other magnetic data storage medium, a CD-ROM, any other optical data storage medium, any physical medium with one or more patterns of holes, a RAM, a PROM, an EPROM, a FLASH-EPROM, NVRAM, and any other memory chip or cartridge.

For the purposes of the present disclosure, the phrases "A and/or B" and "A or B" mean (A), (B), or (A and B). For the purposes of the present disclosure, the phrases "A, B, and/or C" and "A, B, or C" mean (A), (B), (C), (A and B), (A and C), (B and C), or (A, B, and C). Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices.

The description uses the phrases "an implementation", "various implementations", and "some implementations", each of which may refer to one or more of the same or different implementations. Furthermore, the terms "comprising", "including", "having", and the like, as used with respect to embodiments of the present disclosure, are synonymous. When used to describe a range of dimensions, the phrase "between X and Y" represents a range that includes X and Y. As used herein, an "apparatus" may refer to any individual device, collection of devices, part of a device, or collections of parts of devices. The drawings are not necessarily to scale.

Those skilled in the art will recognise that the scope of the invention is not limited by the examples described herein, but is instead defined by the appended claims.

## Claims

1. A method of tuning a static field mass filter of a mass spectrometer, the static field mass filter having a first Wien filter and a second Wien filter, the method comprising:
causing a beam of ions comprising a plurality of ion species to be injected through an entrance aperture into the static field mass filter;
applying, in the first Wien filter, a first magnetic field and a first electric field having a first magnetic field strength and a first electric field strength, respectively, to deflect the beam into a respective subbeam for each ion species of the plurality of ion species;
applying, in the second Wien filter, a second magnetic field and a second electric field having the first magnetic field strength and the first electric field strength, respectively, to counter the deflection of the subbeams caused by the first Wien filter;
adjusting a first lens (214) of the static field mass filter, positioned downstream of the first Wien filter and upstream of the second Wien filter, such that the trajectories of the subbeams downstream of the second Wien filter are substantially mass independent.

2. The method of claim 1, further comprising, after adjusting the first lens (214), adjusting at least one further lens (211, 216, 218) of the static field mass filter to focus one or more of the subbeams towards a target.

3. The method of claim 2, wherein the at least one further lens (216, 218) is positioned downstream of the second Wien filter.

4. The method of claim 2, wherein the at least one further lens (211) is positioned upstream of the second Wien filter.

5. The method of any preceding claim, further comprising, prior to applying in the first Wien filter a first magnetic field and a first electric field and in the second Wien filter a second magnetic field and a second electric field, adjusting at least one further lens (211, 216, 218) to maximise the intensity of the subbeams at the mass spectrometer.

6. The method of any preceding claim, wherein adjusting the first lens (214) comprises determining at least one isotope ratio and determining whether the adjusting results in a substantially unchanged isotope ratio.

7. The method of any of claims 2 to 6 when dependent on claim 2, further comprising, after adjusting the at least one further lens (211, 216, 218), moving the subbeams relative to the target and detecting the resulting intensity at the mass spectrometer, preferably further comprising maximizing the resulting intensity,
optionally wherein the method further comprises detecting at least one isotope ratio of different isotope species.

8. The method of any preceding claim when dependent on claim 2, wherein the target is at least one of:
an entrance aperture of the mass spectrometer downstream of the static mass filter,
an entrance aperture of a collision cell downstream of the static mass filter,
an entrance aperture of a vacuum chamber downstream of the static mass filter, and
an ion optical element.

9. The method of claim 1, wherein the first lens (214) is adjusted to focus one or more of the subbeams towards an exit aperture of the static field mass filter to yield one or more focused subbeams,
optionally wherein the method further comprises:
adjusting a second lens (216) of the static field mass filter, positioned downstream of the first and second Wien filters, to further focus the one or more focused subbeams towards the exit aperture.

10. The method of claim 9, wherein a third electric field having a second electric field strength is applied in the first (214) or second (216) lens, and wherein adjusting the first or second lens comprises:
varying the strength of the electric field of the first or second lens in a predetermined range including the second electric field strength;
determining whether the varying results in a change, greater than a predetermined maximum change, in a first ratio of an intensity of ions in the subbeam for a first species of the plurality of ion species and an intensity of ions in the subbeam for a second species of the plurality of ion species; and
responsive to determining that the varying leads to a change in the first ratio that is greater than the predetermined maximum change:
changing the second electric field strength to a third electric field strength; and
repeating the varying, the determining, and the changing until it is determined that the varying does not result in a change in the first ratio that is greater than the predetermined maximum change.

11. The method of claim 9, wherein a third electric field having a second electric field strength is applied in the first (214) or second (216) lens, and wherein adjusting the first or second lens comprises:
a) determining a first ratio of an intensity of ions in the subbeam for a first species of the plurality of ion species and an intensity of ions in the subbeam for a second species of the plurality of ion species;
b) changing the electric field strength of the electric field applied in the first or second lens to a third electric field strength that is lower than the second electric field strength;
c) subsequent to the changing of the electric field strength applied in the first or second lens to the third electric field strength, determining a second ratio of an intensity of ions in the subbeam for the first species of the plurality of ion species and an intensity of ions in the subbeam for the second species of the plurality of ion species;
d) changing the electric field strength of the electric field applied in the first or second lens to a fourth electric field strength that is higher than the second electric field strength;
e) subsequent to the changing of the electric field strength applied in the first or second lens to the fourth electric field strength, determining a third ratio of an intensity of ions in the subbeam for the first species of the plurality of ion species and an intensity of ions in the subbeam for the second species of the plurality of ion species;
f) determining a first difference between the first and second determined ratios and a second difference between the first and third determined ratios;
g) determining whether the first and second differences are within a predetermined difference range; and
h) responsive to determining that the first and second differences are not within the predetermined difference range:
changing the second electric field strength to a fifth electric field strength; and
repeating steps a) to h) until it is determined that the first and second differences are within the predetermined difference range,
optionally wherein the fifth electric field strength is determined using a search algorithm,
further optionally wherein the search algorithm is a binary or linear search algorithm.

12. The method of any of claims 9 to 11, wherein the adjusting of the first lens (214) of the static field mass filter is to focus one or more of the sub-beams towards the exit aperture and into the second Wien filter.

13. The method of claim 1, further comprising:
adjusting a third lens (211) of the static field mass filter, positioned upstream of the first and second Wien filters, to focus the beam towards an, or the, exit aperture of the static field mass filter,
optionally wherein at least one of:
the static field mass filter has a central axis, the entrance and exit apertures of the static field mass filter are aligned on the central axis, and the beam of ions is injected into the static field mass filter along the central axis, and wherein the adjusting of the third lens (211) of the static field mass filter is to focus the beam towards the exit aperture of the static field mass filter and to ensure that the beam passes through the first and second Wien filters on the central axis of the static field mass filter;
or
the method further comprises: prior to the adjusting of the third lens (211) of the static field mass filter, narrowing a slit of the static field mass filter, the slit being downstream of the first Wien filter and upstream of the first lens (214), to a first slit width; and, subsequent to the adjusting of the third lens of the static field mass filter, widening the slit to a second width.

14. The method of any preceding claim, wherein at least one of:
adjusting a lens comprises adjusting a deflection of the lens; or
the method is computer-implemented.

15. An apparatus configured to perform the method of any preceding claim; or
a computer-readable medium comprising instructions which, when executed by a processor of an apparatus, cause the apparatus to perform the method of any preceding claim.
